(19) **Europäisches Patentamt**
**European Patent Office**
**Office européen des brevets**

(11) **EP 2 798 018 B1**

(12) **EUROPEAN PATENT SPECIFICATION**

(45) Date of publication and mention
of the grant of the patent:
**07.04.2021 Bulletin 2021/14**

(21) Application number: **12799478.8**

(22) Date of filing: **04.12.2012**

(51) Int Cl.:
*C09D 123/02* (2006.01)      *C09D 153/00* (2006.01)

(86) International application number:
**PCT/US2012/067684**

(87) International publication number:
**WO 2013/101404 (04.07.2013 Gazette 2013/27)**

(54) **ADHESION PROMOTER COMPOSITION FOR POLYOLEFIN SUBSTRATE**

HAFTVERMITTLERZUSAMMENSETZUNG FÜR POLYOLEFINSUBSTRAT

COMPOSITION DE PROMOTEUR D'ADHÉSION POUR SUBSTRAT DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2011 US 201161581686 P**

(43) Date of publication of application:
**05.11.2014 Bulletin 2014/45**

(73) Proprietor: **Dow Global Technologies LLC**
**Midland, MI 48674 (US)**

(72) Inventors:
• **BATRA, Ashish**
**Zionsville, IN 46077 (US)**

• **WALTON, Kim, L.**
**Lake Jackson, TX 77566 (US)**
• **DIAS, Peter, S.**
**Missouri City, TX 77459 (US)**

(74) Representative: **V.O.**
**P.O. Box 87930**
**2508 DH Den Haag (NL)**

(56) References cited:
**EP-A1- 1 275 670      WO-A1-2008/080111**
**WO-A1-2010/008371    WO-A1-2011/142947**
**WO-A2-2008/033343    WO-A2-2008/057886**
**CN-A- 1 395 588**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present disclosure is directed to an adhesion promoter composition, and articles containing same.

BACKGROUND

Polyolefin articles, such as molded polyolefin articles, find myriad applications in consumer products including automobiles, household appliances, films, footwear, toys, cell phones, and computer casing. In many situations, it is desirable to paint the polyolefin article to enhance the end product. Polyolefins, however, are difficult to paint due to their nonpolar and inert nature.

Chlorinated polyolefins are known to promote adhesion between polyolefin articles and paint. Chlorinated polyolefins, however, are being phased out because of the environmental concerns surrounding their use. The art recognizes the need for adhesion promoter compositions for the painting or coating of polyolefin substrates. The art recognizes the need for halogen-free adhesion promoter compositions for the painting or coating of polyolefin substrate.

SUMMARY

The present disclosure is directed to an adhesion promoter composition comprising a solvent and a functionalized olefin block copolymer, and articles with the adhesion promoter composition applied thereto.

In an embodiment, the adhesion promoter composition comprises from 80 wt % to 99 wt % of a solvent and from 20 wt % to 1 wt % of a functionalized olefin block copolymer.

In an embodiment, the adhesion promoter composition is halogen-free.

The present disclosure provides an article. In an embodiment, the article comprises a substrate surface comprising a polyolefin. A layer of the functionalized olefin block copolymer is on the substrate surface.

BRIEF DESCRIPTION OF THE DRAWING

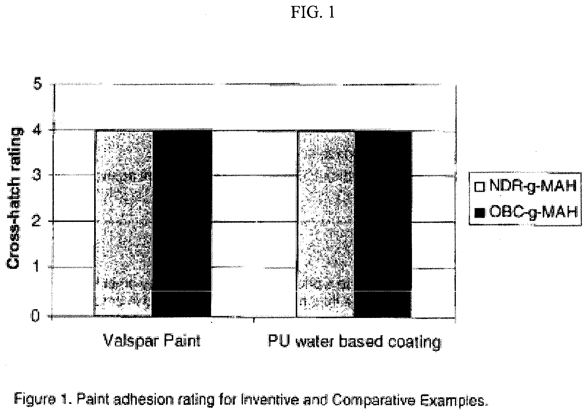

Figure 1 shows cross-hatch ratings for embodiments of the present disclosure.

DETAILED DESCRIPTION

*1. Adhesion Promoter Composition*

The present disclosure provides an adhesion promoter composition. The adhesion promoter composition includes a solvent and a functionalized olefin block copolymer. In an embodiment, the adhesion promoter composition includes from 80 wt % to 99 wt % of the solvent, and from 20 wt % to 1 wt % of a functionalized olefin block copolymer. Weight percent is based on the total weight of the adhesion promoter composition.

An "adhesion promoter composition," as used herein, is a composition that enhances attachment between a substrate surface and a coating material. The adhesion promoter composition adheres to the substrate surface and simultaneously adheres to a coating material to form a unitary three component structure of the substrate surface, adhesion promoter composition, and the coating material. The coating material is the outer portion of the structure. A "coating material" is a substance suspended in a liquid medium and applied to a substrate as a protective coating or a decorative coating. Nonlimiting examples of a coating material include paint, stain, sealant, and varnish.

The substrate is a polymeric material. The substrate may be composed of a polyolefin, a propylene-based polymer, an ethylene-based polymer, polycarbonate, polyurethane, ethylene-propylene-diene-monomer (EPDM) rubber, and combinations thereof. The substrate may be a thermoplastic olefin (TPO). The substrate can be extruded, thermoformed, thermoset, injection molded, blow molded, and any combination thereof.

*A. Solvent*

The present adhesion promoter composition includes a solvent. The solvent is an aromatic hydrocarbon, an aliphatic hydrocarbon, an alicyclic hydrocarbon, a ketone, an ester, and combinations thereof. The solvent is present in an amount to dissolve the functionalized olefin block copolymer.

Nonlimiting examples of suitable aromatic hydrocarbons include benzene, toluene, and xylene.

Nonlimiting examples of suitable aliphatic hydrocarbons include aliphatic hydrocarbons such as hexane, heptane, octane, decane, and combinations thereof.

Nonlimiting examples of suitable alicyclic hydrocarbons include cyclohexane, cyclohexene, methylcyclohexane, and combinations thereof.

Nonlimiting examples of suitable ketones include acetone, methyl isobutyl ketone, methyl ethyl ketone, pentanone, hexanone, isophorone, acetophenone, and combinations thereof.

Nonlimiting examples of suitable esters include esters such as methyl acetate, ethyl acetate, butyl acetate, methyl propionate or butyl formate.

In an embodiment, the solvent is selected from benzene, toluene, xylene, methyl ethyl ketone, methyl isobutyl ketone, and combinations thereof. The solvent is present in an amount from 80 wt %, or 85 wt %, or 90 wt % to 99 wt %, of the composition. Weight percent is based on the total weight of the composition.

In an embodiment, the solvent is xylene.

In an embodiment, the solvent is halogen-free.

*B. Functionalized Olefin Block Copolymer*

The adhesion promoter composition also includes a functionalized olefin block copolymer. A "functionalized olefin block copolymer," as used herein, is an olefin block copolymer with a functional group bonded to the olefin block copolymer backbone. The functional group may be bonded to the olefin block copolymer by way of grafting, hydrogenation, nitrene insertion reaction, or other functionalization reaction.

Nonlimiting examples of suitable functional groups include carboxylic acid, ester, anhydride, primary amine, secondary amine, hydroxyl, epoxy, heteroatom (silane) and combinations thereof. The functionalized olefin block copolymer includes from 0.1 wt % to 1.0 wt % of the functional group. Weight percent is based on the total weight of the functionalized olefin block copolymer.

In an embodiment, the functional group is maleic anhydride (MAH).

In an embodiment, the functionalized olefin block copolymer is the reaction product of a base olefin block copolymer with a free radical initiator (such as a peroxide), and a functional group.

A "base-olefin block copolymer," as used herein, is the olefin block copolymer prior to functionalization. An "olefin block copolymer (or "OBC"), as used herein, is a multi-block or segmented copolymer and includes two or more chemically distinct regions or segments (referred to as "blocks") joined in a linear manner, that is, a polymer comprising chemically differentiated units which are joined end-to-end with respect to polymerized ethylenic functionality, rather than in pendent or grafted fashion. In certain embodiments, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The olefin block copolymer is characterized by unique distributions of polydispersity index (PDI or $M_w/M_n$), block length distribution, and/or block number distribution due to the unique process for making of the copolymers. More specifically, when produced in a continuous process, embodiments of the OBC may possess a PDI ranging from about 1.7 to 8; or from 1.7 to 3.5; or from 1.7 to 2.5; or from 1.8 to 2.5; or from 1.8 to 2.1. When produced in a batch or semi-batch process, embodiments of the OBC may possess a PDI ranging from 1.0 to 2.9; or from 1.3 to 2.5; or from 1.4 to 2.0; or from 1.4 to 1.8.

In an embodiment, the OBC is an ethylene/a-olefin multi-block copolymer. The ethylene/a-olefin multi-block copolymer comprises a majority mole fraction of units derived from ethylene, the ethylene comprising at least 50 mol %, or at least 60 mol %, or at least 70 mol %, or at least 80 mol % with the remainder of the multi-block copolymer comprising the comonomer. The ethylene/a-olefin multi-block copolymer further includes ethylene and the co-polymerizable α-olefin comonomer in polymerized form, characterized by multiple (*i.e.,* two or more) blocks or segments of two or more polymerized monomer units differing in chemical or physical properties (block interpolymer), and is a multi-block copolymer. In some embodiments, the multi-block copolymer may be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher; "A" represents a hard block or segment; and "B" represents a soft block or segment. The A's and B's are linked in a linear fashion, not in a branched or a star fashion. "Hard" segments refer to blocks of polymerized units in which ethylene is present in an amount greater than 95 weight percent in some embodiments, and in other embodiments greater than 98 weight percent. In other words, the comonomer content in the hard segments is less than 5 weight percent in some embodiments, and in other embodiments, less than 2 weight percent of the total weight of the hard segments. In some embodiments, the hard segments comprise all, or substantially all, units derived from ethylene.

The "soft" segments, on the other hand, refer to blocks of polymerized units in which the comonomer content is greater than 5 weight percent of the total weight of the soft segments in some embodiments, greater than 8 weight percent, greater than 10 weight percent, or greater than 15 weight percent in various other embodiments. In some embodiments, the comonomer content in the soft segments may be greater than 20 weight percent, greater than 25 weight percent, greater than 30 weight percent, greater than 35 weight percent, greater than 40 weight percent, greater than 45 weight percent, greater than 50 weight percent, or greater than 60 weight percent in various other embodiments.

Because the respective distinguishable segments or blocks formed from two or more monomers are joined into single polymer chains, the polymer cannot be completely fractionated using standard selective extraction techniques. For example, polymers containing regions that are relatively crystalline (high density segments) and regions that are relatively amorphous (lower density segments) cannot be selectively extracted or fractionated using differing solvents. In an embodiment, the quantity of extractable polymer using either a dialkyl ether or an alkane solvent is less than 10, or less than 7, or less than 5, or less than 2, percent of the total polymer weight.

In addition, the OBC disclosed herein possesses a PDI fitting a Schultz-Flory distribution rather than a Poisson distribution. The present OBC is produced by the polymerization process described in U.S. Patent No. 7,858,706 and U.S. Patent No. 7,608,668 which results in a product having both a polydisperse block distribution as well as a polydisperse distribution of block sizes. This results in the formation of OBC product having distinguishable physical properties. The theoretical benefits of a polydisperse block distribution have been previously modeled and discussed in Potemkin, Physical Review E (1998) 57 (6), pp. 6902-6912, and Dobrynin, J. Chem.Phvs. (1997) 107 (21), pp 9234-9238.

In an embodiment, the ethylene/a-olefin multi-block copolymer is defined as having (A) Mw/Mn from 1.7 to 3.5, at least one melting point, Tm, in degrees Celsius, and a density, d, in grams/cubic centimeter, where in the numerical values of Tm and d correspond to the relationship:

$$Tm > -2002.9 + 4538.5(d) - 2422.2(d)^2.$$

In an embodiment, the ethylene/a-olefin multi-block copolymer is defined as having (B) Mw/Mn from 1.7 to 3.5, and is characterized by a heat of fusion, $\Delta H$ in J/g, and a delta quantity, $\Delta T$, in degrees Celsius defined as the temperature difference between the tallest DSC peak and the tallest Crystallization Analysis Fractionation ("CRYSTAF") peak, wherein the numerical values of $\Delta T$ and $\Delta H$ have the following relationships:

$\Delta T > -0.1299 (\Delta H) + 62.81$ for $\Delta H$ greater than zero and up to 130 J/g
$\Delta T \geq 48°C$ for $\Delta H$ greater than 130 J/g

wherein the CRYSTAF peak is determined using at least 5 percent of the cumulative polymer, and if less than 5 percent of the polymer has an identifiable CRYSTAF peak, then the CRYSTAF temperature is 30°C.

In an embodiment, the ethylene/a-olefin multi-block copolymer is defined as having (C) elastic recovery, Re, in percent at 300 percent strain and 1 cycle measured with a compression-molded film of the ethylene/a-olefin interpolymer, and has a density, d, in grams/cubic centimeter, wherein the numerical values of Re and d satisfy the following relationship when ethylene/a-olefin interpolymer is substantially free of crosslinked phase:

$$Re > 1481 - 1629(d).$$

In an embodiment, the ethylene/a-olefin multi-block copolymer is defined as having (D) a molecular weight fraction which elutes between 40°C and 130°C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density and molar comonomer content (based on the whole polymer) within 10 percent of that of the ethylene/a-olefin interpolymer.

In an embodiment, the ethylene/a-olefin multi-block copolymer is defined as having (E) a storage modulus at 25°C, G'(25°C), and a storage modulus at 100°C, G'(100°C), wherein the ratio of G'(25°C) to G'(100°C) is in the range of 1:1 to 9:1.

In an embodiment, the ethylene/a-olefin multi-block copolymer is defined as having (F) a molecular fraction which elutes between 40°C and 130°C when fractionated using TREF, characterized in that the fraction has a block index of at least 0.5 and up to 1 and a molecular weight distribution, Mw/Mn, greater than 1.3.

In an embodiment, the ethylene/a-olefin multi-block copolymer is defined as having (G) an average block index greater than zero and up to about 1.0 and a molecular weight distribution, Mw/Mn greater than 1.3.

The ethylene/a-olefin multi-block copolymer may have any combination of properties (A)-(G) set forth above.

Nonlimiting examples of suitable comonomer include straight-chain/branched α-olefin of 3 to 30 carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1- octadecene and 1-eicosene; cyclo-olefins of 3 to 30, or 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di-and poly-olefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

In an embodiment, the comonomer in the ethylene/a-olefin multi-block copolymer is selected from propylene, octene, butene and hexene. In a further embodiment, the ethylene/a-olefin multi-block interpolymer is an ethylene/octene multi-block copolymer.

*C. Functionalized ethylene/octene multi-block copolymer OBC*

In an embodiment, the functionalized OBC is an ethylene/a-olefin multi-block copolymer that is a functionalized ethylene/octene multi-block copolymer. The functional group is maleic anhydride (MAH). The MAH functionalized ethylene/octene multi-block copolymer contains from 0.1 wt % to 1.0 wt %, of the functional group maleic anhydride. Weight percent is based the total weight of the functionalized ethylene/a-olefin multi-block copolymer.

The base ethylene/octene multi-block copolymer (*i.e.*, the ethylene/octene multi-block copolymer prior to functionalization) has a crystallinity from 1 wt%, or 3 wt% to 7 wt%, or 8 wt %, or 10 wt%. In an embodiment, the base ethylene/octene multi-block copolymer has a crystallinity from 3 wt% to 7 wt%.

The density of the base ethylene/octene multi-block copolymer is from 0.85 $g/cm^3$ to 0.95 $g/cm^3$. In an embod-iment, the density for the base ethylene/octene multi-block copolymer is from 0.85 $g/cm^3$ to 0.88 $g/cm^3$.

In an embodiment, the base ethylene/octene multi-block copolymer has a hard segment content that is at least 10 wt % based on the total weight of the base ethylene/octene multi-block copolymer. A hard segment of at least 10 wt % makes the base ethylene/octene multi-block copolymer capable of being formed into pellets as opposed to being in bale form.

Provision of the base ethylene/octene multi-block copolymer with a crystallinity from 1 wt % to 10 wt % enables the functionalized ethylene/octene multi-block copolymer to remain dissolved in the solvent at a temperature from 15°C to 25°C (*i.e.*, ambient temperature). The crystallinity of 1% to 10% contributes to the capability of the base ethylene/octene multi-block copolymer to be formed into pellets (as opposed to bale form). In an embodiment, pellets of the base ethylene/octene multi-block copolymer are fed through a melt blend extruder and undergo a grafting reaction with MAH in the presence of a free radical initiator such as peroxide.

In an embodiment, the base ethylene/octene multi-block copolymer has a molecular weight (MW) from 1,000 g/mol, or 10,000 g/mol to 300,000 g/mol, or 500,000 g/mol, or 1,000,000 g/mol, or 5,000,000 g/mol.

In an embodiment, the base ethylene/octene multi-block copolymer has a melt index (MI) greater than 15 g/10, or 25 g/10 min to 50 g/10 min, or 100 g/10 min. Applicant discovered that base ethylene/octene multi-block copolymer with a MI that is greater than 15 g/10 min to 100 g/ 10 min contributes to the solubility of the functionalized ethylene/octene multi-block copolymer in aromatic hydrocarbon solvent.

In an embodiment, the base ethylene/octene multi-block copolymer has a MW from 10,000 g/mole to 300,000 g/mol and an MI from greater than 15 g/10 to 50 g/10 min.

In an embodiment, the ethylene/octene multi-block copolymer is functionalized with maleic anhydride. The MAH functionalized ethylene/octene multi-block copolymer contains from 0.1 wt %, or 0.2 wt %, or 0.23 wt %, or 0.25 wt % to 0.8 wt %, or 1.0 wt %, of MAH. Applicant discovered that when the base ethylene/octene multi-block copolymer has a MI from greater than 15 g/10 to 100 g/10 min, a graft from 0.1 wt % to 1.0 wt % of MAH onto the base ethylene/octene multi-block copolymer yields an adhesion promoter composition with a viscosity suitable for spray applications.

In an embodiment, the adhesion promoter composition includes (i) an aromatic hydrocarbon solvent and (ii) functionalized ethylene/octene multi-block copolymer with 0.1 wt % to 10 wt % MAH, the base ethylene/octene multi-block copolymer having from 3% to 8% crystallinity, and a MI greater than 15 g/10 min to 50 g/10 min. The adhesion promoter composition also has a viscosity from 1 cP to 100 cP.

The base ethylene/octene multi-block copolymer can be tailored to the type of polyolefin to which it is to be applied. In an embodiment, the base ethylene/octene multi-block copolymer is selected for application to an ethylene-based polymer. The term, "ethylene-based polymer," as used herein, is a polymer that comprises a majority weight percent polymerized ethylene monomer (based on the total weight of polymerizable monomers), and optionally may comprise at least one polymerized comonomer. The base ethylene/octene multi-block copolymer has a soft segment composed of from 20 mol%, to 30 mol%, or 35 mol% units derived from octene. Applicant discovered that base ethylene/octene multi-block copolymer with 20 mol% to 35 mol% units derived from octene in the soft segment promotes adhesion to an ethylene-based polymer while simultaneously providing adhesion to the coating material.

In an embodiment, the base ethylene/octene multi-block copolymer is selected for application to an ethylene-based polymer and the base ethylene/octene multi-block copolymer has a soft segment composed of 20 mol% to 30 mol% units derived from octene.

In another embodiment, the base ethylene/octene multi-block copolymer is tailored or otherwise selected for application to a propylene-based substrate. The term, "propylene-based polymer," as used herein, is a polymer that comprises a majority weight percent polymerized propylene monomer (based on the total amount of polymerizable monomers), and optionally may comprise at least one polymerized comonomer. The base ethylene/octene multi-block copolymer has a soft segment composed of from 35 mol%, or greater than 35 mol% to 50 mol% units derived from octene. Applicant discovered that a base ethylene/octene multi-block copolymer with 35 mol% to 50 mol% units derived from octene in the soft segment promotes adhesion to propylene-based polymer while simultaneously providing adhesion to the coating material.

In an embodiment, the base ethylene/octene multi-block copolymer is selected for application to a propylene-based polymer and the base ethylene/octene multi-block copolymer has a soft segment composed of greater than 35 mol% to 50 mol% units derived from octene.

Applicant discovered a MAH functionalized ethylene/octene multi-block copolymer that remains dissolved in the aromatic hydrocarbon solvent at room temperature. The MAH functionalized ethylene/octene multi-block copolymer provides the following advantageous combination of properties: (1) low crystallinity (1-10%), (2) graftability, and (3) solubility in the solvent at 15°C-25°C. In addition, the base OBC can be pelletized (as opposed to conventional EPDM-based adhesion promoters that are typically in bale form). Base OBC pellets provide ease-of-handling and improved processability (such as non-agglomeration) when compared to polymer in bale form (such as conventional EPDM).

*D. Additive*

The adhesion promoter composition may include one or more of the following optional additives: plasticizer, antioxidant, ultraviolet absorber, antistatic agent, pigment, viscosity modifier, thixotropy modifier, filler, anti-sag agent, surface tension modifier, antiblock agent, release agent, flame resistant agent, abrasion and scratch mar additive, antimicrobial agent, surfactant, crosslinking agent, and any combination thereof.

In an embodiment, the present adhesion promoter composition is halogen-free.

The present adhesion promoter composition may comprise two or more embodiments disclosed herein.

*2. Article*

The present disclosure provides an article. The article includes a substrate with a surface composed of a polyolefin. The article also includes a layer of a functionalized OBC on the substrate surface. The functionalized OBC is any functionalized OBC as described herein. The functionalized OBC contacts and adheres to the substrate surface and forms a layer on the surface of the polyolefin substrate. The layer of the functionalized OBC may be continuous or discontinuous. The layer of the functionalized OBC may be coextensive or non-coextensive with the substrate surface.

The untreated article (*i.e.*, the article without the layer of functionalized OBC) can be composed solely of the substrate. Alternatively, the untreated article is a multi-component (or a multi-layer) object, of which the polyolefin substrate is one of a plurality of components (or one of a plurality of layers). Nonlimiting examples of suitable articles include automobile parts (bumper, fascia, trim interior/exterior parts), consumer electronics (computers, cell phones, hand-held data devices), consumer appliances (refrigerator, range, blender), toys, footwear, adhesives, films, laminates, and fibers.

In an embodiment, the substrate surface is composed of a polyolefin. The adhesion promoter composition is applied to the substrate surface. Nonlimiting techniques by which to apply the adhesion promoter composition to the substrate surface include spray coating, dip coating, bar coating, brush coating, roll coating, curtain coating, and combinations thereof.

In an embodiment, the adhesion promoter composition is applied at a thickness (typically 20 microns to 120 microns) that will produce a dry layer of the functionalized OBC having a thickness from 1 micron, or 5 microns, or 8 microns to 10 microns, or 15 microns, or 20 microns on the substrate surface.

In an embodiment, the adhesion promoter composition is sprayed onto the polyolefin surface of the substrate.

In an embodiment, the substrate surface is composed of a majority amount of an ethylene-based polymer. The term "majority amount," as used herein, is a polymer that is present in the largest proportion of a polymer composite (based on weight percent). The polymer present in a majority amount (i) may be less than 50 wt % of the polymer composite, or (ii) may be at least 50 wt % (or more) of the polymer composite. It is understood that when the substrate surface is composed of a single polymer (*i.e.*, the substrate surface is not a polymer composite), the single polymer is present in a majority amount.

The adhesion promoter composition is tailored to the majority amount of the ethylene-based polymer present at the substrate surface. In particular, the base OBC is an ethylene/octene multi-block copolymer with from 20 mol % to 35 mol % units derived from octene in the soft segment. The base ethylene/octene multi-block copolymer also has a crystallinity from 1% to 10% and an MI from greater than 15 g/ 10 min to 100 g/min (and any respective subranges), as disclosed above. The ethylene/octene multi-block copolymer is functionalized with 0.1 wt % to 1.0 wt % MAH.

In an embodiment, the substrate surface is composed of a majority amount of a propylene-based polymer. The adhesion promoter composition is tailored to the majority amount of the propylene-based polymer present at the substrate surface. In particular, the base OBC is an ethylene/octene multi-block copolymer with from 35 mol %, or greater than 35 mol % to 50 mol % units derived from octene in the soft segment. The base ethylene/octene multi-block copolymer also has a crystallinity from 1% to 10% and an MI from greater than 15 g/ 10 min to 100 g/min (and any respective subranges), as disclosed above. The ethylene/octene multi-block copolymer is functionalized with 0.1 wt % to 1.0 wt % MAH.

In an embodiment, the article also includes a layer of a coating material. The coating material is applied to the layer of the functionalized OBC. The coating material contacts and adheres to the layer of functionalized OBC, thereby adhering to the substrate surface and forming a three component structure: substrate surface/adhesion promoter composition/coating material (outermost layer). Nonlimiting techniques by which to apply the coating material include spray coating, dip coating, bar coating, brush coating, roll coating, curtain coating, and combinations thereof.

In an embodiment, the present adhesion promoter composition is mixed with the coating material to form a mixture. The mixture is subsequently applied to the substrate surface to coat the substrate by way of any of the application techniques disclosed above. When the coating material is dry, the coating material, the functionalized OBC, and the substrate surface form a three component structure (or layer structure) with the functionalized OBC adhering the coating material to the substrate surface.

In an embodiment, the coating material is a paint. The paint includes a solvent, a binder, a pigment, and optional additives. Nonlimiting examples of solvent for the coating material include toluene, xylene, methyl ethyl ketone, methyl isobutyl ketone and water. The pigment may include inorganic materials such as titanium dioxide (rutile), mica flakes, iron oxide, silica, aluminum.

Nonlimiting examples of binder include acrylic polymers, alkyd resins, cellulose based materials, such as cellulose acetate butyrate, melamine resins, carbamate resins, polyester resins, vinyl acetate resins, urethane resins, and any combination thereof. Nonlimiting examples of additives for the coating material include catalysts, thickeners, stabilizers, emulsifiers, texturizers, adhesion promoters, UV stabilizers, flatteners (de-glossing agents), biocides, polyols, alcohols, and any combination thereof.

In an embodiment the paint includes 60 wt % solvent, 30 wt % binder, 7 wt % to 8 wt % pigment, and 2 wt % to 3 wt % additives. Weight percent is based on total weight of the paint.

The present article may comprise two or more embodiments disclosed herein.

DEFINITIONS

The terms "comprising", "including", "having" and their derivatives do not exclude the presence of any additional component or procedure. The term, "consisting essentially of' excludes any other component or procedure, except those essential to operability. The term "consisting of' excludes any component or procedure not specifically stated.

TEST METHODS

Crystallinity- The percent crystallinity is calculated by dividing the heat of fusion (~delta Hf), determined from the second heat curve, by a theoretical heat of fusion of 292 J/g for ethylene-based polymer (PE) (165 J/g, for propylene-based polymer (PP)), and multiplying this quantity by 100 (for example, % cryst. = (~Hf 292 J/g) x 100 for PE). The melting point(s) (Tm) of each polymer sample is determined from the second heat curve obtained from DSC, as described above. The crystallization temperature (Tc) is measured from the first cooling curve.

Density-samples for density measurement are prepared according to ASTM D 1928. Measurements are made within one hour of sample pressing using ASTM D792, Method B.

Paint adhesion-paint adhesion to substrate is determined in accordance with ASTM D 3359.

Standard CRYSTAF Method

Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

DSC Standard Method

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to - 40°C at 10°C/min cooling rate and held at -40°C for 3 minutes. The sample is then heated to 150°C at 10°C/min heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

GPC Method

The gel permeation chromatographic system consists of either a Polymer Laboratories Model PL-210 or a Polymer Laboratories Model PL-220 instrument. The column and carousel compartments are operated at 140°C Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene}=0.431(M_{polystyrene})$.

Polyethylene equivalent molecular weight calculations are performed using Viscotek TriSEC software Version 3.0.

Compression Set

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 min at 190°C, followed by 86 MPa for 2 min at 190°C, followed by cooling inside the press with cold running water at 86 MPa.

TMA

Thermal Mechanical Analysis (Penetration Temperature) is conducted on 30 mm diameter x 3.3 mm thick, compression molded discs, formed at 180°C and 10 MPa molding pressure for 5 minutes and then air quenched. The instrument used is a TMA 7, brand available from Perkin-Elmer. In the test, a probe with 1.5 mm radius tip (P/N N519-0416) is applied to the surface of the sample disc with IN force. The temperature is raised at 5°C/min from 25°C. The probe penetration distance is measured as a function of temperature. The experiment ends when the probe has penetrated 1 mm into the sample.

DMA

Dynamic Mechanical Analysis (DMA) is measured on compression molded disks formed in a hot press at 180°C at 10 MPa pressure for 5 minutes and then water cooled in the press at 90°C/min. Testing is conducted using an ARES controlled strain rheometer (TA instruments) equipped with dual cantilever fixtures for torsion testing.

A 1.5 mm plaque is pressed and cut in a bar of dimensions 32 x 12 mm. The sample is clamped at both ends between fixtures separated by 10 mm (grip separation ΔL) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation ΔL increases with the temperature, particularly above the melting or softening point of the polymer sample. The test stops at the maximum temperature or when the gap between the fixtures reaches 65 mm.

Melt flow rate, or MFR is measured in accordance with ASTM D 1238, Condition 230°C/2.16 kg.

Melt index, or MI, is measured in accordance with ASTM D 1238, Condition 190°C/2.16 kg.

ATREF

Analytical temperature rising elution fractionation (ATREF) analysis is conducted according to the method described in U.S. Pat. No. 4,798,081 and Wilde, L.; Ryle, T. R.; Knobeloch, D. C.; Peat, I. R.; Determination of Branching Distributions in Polyethylene and Ethylene Copolymers, J. Polym. Sci., 20, 441-455 (1982). The composition to be analyzed is dissolved in trichlorobenzene and allowed to crystallize in a column containing an inert support (stainless steel shot) by slowly reducing the temperature to 20°C at a cooling rate of 0.1°C/min. The column is equipped with an infrared detector. An ATREF chromatogram curve is then generated by eluting the crystallized polymer sample from the column by slowly increasing the temperature of the eluting solvent (trichlorobenzene) from 20 to 120°C at a rate of 1.5°C/min.

$^{13}$C NMR Analysis

The samples are prepared by adding approximately 3 g of a 50/50 mixture of tetrachloroethane-d$^2$/orthodichlorobenzene to 0.4 g sample in a 10 mm NMR tube. The samples are dissolved and homogenized by heating the tube and its contents to 150°C. The data are collected using a JEOL Eclipse™. 400 MHz spectrometer or a Varian Unity Plus™. 400 MHz spectrometer, corresponding to a $^{13}$C resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130°C in a 10 mm broad band probe. The comonomer incorporation is determined using Randall's triad method (Randall, J. C.; JMS-Rev. Macromol. Chem. Phys., C29, 201-317 (1989).

Measurement of Weight Percent of Hard Segments and Soft Segments-the soft segment weight percentage (and thus the hard segment weight percentage) can be measured by DSC or NMR as disclosed in U.S. Patent No. 7,608,668 col. 57 line 30 through col. 63 line 12.

Mooney Viscosity Mooney viscosity ("MV")-Interpolymer MV (ML1+4 at 125°C) is measured in accordance with ASTM 1646-04.

Polymer Fractionation by TREF

Large-scale TREF fractionation is carried by dissolving 15-20 g of polymer in 2 liters of 1,2,4-trichlorobenzene (TCB) by stirring for 4 hours at 160°C. The polymer solution is forced by 15 psig (100 kPa) nitrogen onto a 3 inch by 4 foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, Tex., 76801) and stainless steel, 0.028" (0.7 mm) diameter cut wire shot (available fro m Pellets, Inc. 63 Industrial Drive, North Tonawanda, N.Y., 14120). The column is immersed in a thermally controlled oil jacket, set initially to 160°C The column is first cooled ballistically to 125°C, then slow cooled to 20°C at 0.04°C per minute and held for one hour. Fresh TCB is introduced at about 65 ml/min while the temperature is increased at 0.167°C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetrafluoroethylene coated filter paper (available from Osmonics Inc., Cat# Z50WP04750). The filtrated fractions are dried overnight in a vacuum oven at 60°C and weighed on an analytical balance before further testing.

Some embodiments of the present disclosure will now be described in detail in the following Examples.

EXAMPLES

*1. Polymers*

Properties for maleic anhydride grafted OBC polymers (MAH-g-OBC) and maleic anhydride grafted polymers used as comparative samples (CS) are provided in Table 1 below.

MAH is grafted to OBC1 and OBC2 according to the Procedure 1 described below. Weight percent of MAH (based on total weight of functionalized polymer) present in each functionalized OBC is provided in Table 1 below.

Procedure 1

1) Put 50 g OBC polymer in Haake Rheomix 600 P mixer with a nominal temperature of 170°C and a stirring speed of 10 rpm and increased stepwise over a one minute period to 50 rpm. Allow melting and mixing for 4 minutes.
2) Powdered 0.75g of MAH is added to the mixer.
3) After two minutes of mixing, 80 microliter of a 15 wt% solution of 2.5-dimethyl-2.5 (tert-butylperoxy) hexane (Luperox™ 101, Sigma Aldrich) in do-decane is injected via syringe. Mixing is continued for an additional 6.5 minutes.
4) Remove the grafted material from the Haake mixer, and allow to cool to room temperature.
5) The resin is further dried overnight in vacuum (15 hours) at 70°C and 30 mm Hg in order to ensure evaporation of residual MAH.

In Procedure 1, the block architecture allows base OBC 1 and base OBC 2 each with a crystallinity of 1% to 10% to be formed into pellets and fed through a conventional reactive extruder and undergo the grafting reaction. MAH-g-OBC1 and MAH-g-OBC2 each are halogen-free. The properties of the functionalized polymers are provided in Table 1 below.

Table 1

| Example/ Sample | Base polymer | Density (g/cc) | MI** | Cryst (%) | mol% octene in SS | % soft segment | MAH (wt%) | Form |
|---|---|---|---|---|---|---|---|---|
| OBC1 | ethylene/ octene block copolymer | 0.8625 | 27.04 | 7.16 | 28.20 | 90 | 0.24 | Pellet |
| OBC2 | ethylene/ octene block copolymer | 0.8595 | 1.81 | 5.73 | 48.0 | 86 | 0.21 | Pellet |
| CS1* | EPDM (42 wt% ethylene content) | 0.860 | - | - | - | - | 0.33 | Bale |
| *=NDR 145 EPDM, available from The Dow Chemical Company **=MI is for MAH-grafted polymer SS=soft segment (wt % based on wt of base polymer) | | | | | | | | |

*2. Painting substrate composed of a majority amount of ethylene-based polymer*

Table 2

| Adhesion promoter composition | |
|---|---|
| Example 1 (functionalized OBC1 from Table 1) | 5 wt % MAH-g-OBC1/95 wt% xylene |
| Comparative Sample 1 (functionalized EPDM from Table 1) | 5wt % MAH-g-CS1/ 95 wt% xylene |
| Substrate | |
| 51-1 | 4770/INFUSE™ 9007/700-12/Hybrobrite 550 (38.62/8.38/17/36 wt%) Footwear Outsole formulation |
| 51-2 | 4785/ INFUSE™ 9007/700-12/Hydrobrite 550 (38.62/8.38/17/36 wt%) Footwear Outsole Formulation |
| INFUSE™ 9500 | See properties below |
| Paints | |
| Valspar Plastic Enamel Paint (Valspar Paint) | |
| United Paint Water Based Polyurethane (PU Coating) | |
| Footwear paint Prodotto ™ 2K, polyurethane paint from Kendra + 4.5 parts per hundred isocyanate (Pre-polymer). | |

4770 is an EPDM available from The Dow Chemical Company (Midland, MI) and has the following properties: density of 0.872 g/cc, Mooney viscosity (ML 1+4, 125°C) of 70, ethylene content of 70 wt% and 5-ethylidene-2-norbornene (ENB) content of 5 wt%. Weight percent based on total weight of the EPDM.

4785 is an EPDM available from The Dow Chemical Company (Midland, MI) and has the following properties: density of 0.88 g/cc, Mooney viscosity (ML 1+4, 125°C) of 85, ethylene content of 68 wt% and ENB content of 5 wt%. Weight percent based on total weight of the EPDM.

INFUSE™ 9500 - 5 g/10 min MI, 0.877 g/cc density olefin block copolymer (OBC), with 25/75 hard/soft segment split by weight percent and 18 mol % units derived from octene in the soft segment. Weight percent based on the total weight of the OBC.

INFUSE™ 9007 - 0.5 g/10 min MI, 0.866 g/cc density olefin block copolymer (OBC), with 11/89 hard/soft segment split by weight percent and 18 mol % units derived from octene in the soft segment. Weight percent based on the total weight of the OBC.

700-12 is a propylene homopolymer available from The Dow Chemical Company. 700-12 has a density of 0.900 g/cc (ASTM D792), and a melt flow rate of 12 g/10 min (based on total wt) (230 °C/2.16 kg, ASTMD1238).

Hydrobrite™ 550 (Sonneborn) - mineral oil with nominal 70 wt % paraffinic and 30 wt % naphthenic content, and average 541 molecular weight (MW).

Table 2 sets forth adhesion promoter compositions, paints and substrates. The adhesion promoter compositions and paints of Table 2 are applied to substrates 51-1 and 51-2 and INFUSE™ 9500 according to the Procedure 2 below. Substrate 51-1 and 51-2 and INFUSE™ 9500 each is composed of a majority amount of ethylene-based polymer.

Procedure 2

1) 5g of functionalized polymer is put in a round bottom flask with a magnetic stirrer and 100 g of xylene is added to it. A condenser is attached to the flask and the assembly is placed over a heating plate set to a temperature of 140°C. The solution is allowed to stir for 4 hours and then cooled down. The adhesion promoter composition is ready for use.

2) Spray the adhesion promoter composition onto the substrates shown in Table 2 using a spray gun and dry at room temperature for 20 minutes or 50°C for 3 minutes.

3) After 1 hour, spray paint/coating material on to the dried adhesion promoter composition.

4) Test cross-hatch adhesion with 3M tape 610 in accordance with ASTM D3359.

Results

ASTM D 3359 provides a rating for percent coating removed as shown in Table 3 below.

Table 3 ASTM D 3359 -rating percent of coating removed

| 5 | 0% (perfect adhesion) |
|---|---|
| 4 | <5% |
| 3 | 5-15% |
| 2 | 15-35% |
| 1 | 35-65% |
| 0 | >65% |

In the absence of the adhesion promoter composition, the cross-hatch rating is 0 for each of the Valspar Paint and PU Coating on substrates 51-1 and 51-2 (paint adhesion = 0%).

The cross-hatch ratings results are shown in Figure 1. A cross-hatch rating of 4 is 95-99% paint adhesion. In the presence of Example 1 (MAH-g-OBC1), cross-hatch rating is 4 for Valspar Paint on both substrates 51-1, 51-2. In the presence of Example 1 (MAH-g-OBC1), the cross-hatch rating is 4 for PU Coating on both substrates 51-1, 51-2. CS1 (MAH-g-NDR) also shows a cross-hatch rating of 4 for Valspar Paint and PU Coating on both substrates 51-1 and 51-2.

The adhesion promoter composition of Example 1 (MAH-g-OBC1) and Footwear paint Prodotto ™ 2K are applied to INFUSE™ 9500, an ethylene-based polymer, according to Procedure 2 above. A cross-hatch rating of 5 is 100% paint adhesion. In the presence of Example 1 (MAH-g-OBC1), the cross-hatch rating is 5 for Footwear paint Prodotto ™ 2K on INFUSE™ 9500 substrate.

*3. Painting substrate composed of a majority amount of propylene-based polymer*

Table 4

| Adhesion promoter composition (APC) | |
|---|---|
| Example 1 (functionalized OBC1 from Table 1) (28.2 mol% units derived from octene in SS) | 2.5 wt% MAH-g-OBC 1/97.5 wt% xylene 5 wt % MAH-g-OBC1/95 wt% xylene |
| Example 2 (functionalized OBC2 from Table 1) (48 mol% units derived from octene in SS) | 2.5wt % MAH-g-OBC2/ 97.5 wt% xylene 5wt % MAH-g-OBC2/ 95 wt% xylene |
| CS1 (functionalized EPDM from Table 1) | 2.5wt % MAH-g-CS1/ 97.5 wt% xylene 5wt % MAH-g-CS1/ 95 wt% xylene |
| Substrate | |
| Thermoplastic olefin (TPO) substrate contains a majority amount of propylene-based polymer | 56% D221 propylene homopolymer 14% ENR 7487 ethylene/butene copolymer 30% Talc (wt% based on total wt TPO) |
| Paint (coating material) | |
| Acrylic Paint | Resin: acrylate resin Thinner: acetone, ethyl acetate, butyl acetate mixture solvent Hardener: isocyanate |

D221 is a propylene homopolymer with a density of 0.90 g/cc and MFR 35.0 g/10 min (230°C/2.16kg), available from The Dow Chemical Company.

ENR 7487 is an ethylene/butene copolymer with a density of 0.866 g/cc and an MI less than 0.5 g/10 min (190°C/2.16kg), available from The Dow Chemical Company.

Talc is JetFill™ 700C available from Luzenac Inc.

The adhesion promoter composition for application to substrate with a majority amount of propylene-based polymer is prepared according to Procedure 3 below.

Procedure 3

1) 2.5g or 5g of functionalized polymer is put in a round bottom flask with a magnetic stirrer and 100 g of xylene is added to it. A condenser is attached to the flask and the assembly is placed over a heating plate set to a temperature of 140°C. The solution is allowed to stir for 4 hours and then cooled down. The adhesion promoter composition is ready for use.

2) The adhesion promoter composition is applied on the TPO substrate of Table 4 via a wire bar that lays down a wet thickness of 0.8 mil and dried at room temperature for 20°C or 50°C for 3 minutes. A cross-hatch adhesion test with 3M tape 610 tape according to ASTM D3359 is conducted to test adhesion to the substrate. A 2 pack acrylate-based coating material used in the cell-phone industry is applied via a wire bar laying down a dry thickness of 0.5 mil. The coating material is dried in the oven at 60°C for 50 minutes and cross-hatch adhesion with Permacel tape by ASTM D3359 is measured.

Results

In the absence of the adhesion promoter composition, paint adhesion to the TPO substrate is 0%. Table 5 below shows adhesion results for TPO substrate, APC, and paint of Table 4.

Table 5

| Sample | Adhesion of APC to TPO Substrate | Adhesion of the TPO substrate coated with 2.5 wt% APC and paint | Adhesion of the TPO substrate coated with 5.0 wt% APC and paint |
|---|---|---|---|
| Example 1 (MAH-g-OBC1) | 50% | 25% | 50% |
| CS1 (MAH-g-EPDM) | 50% | 0% | 20% |
| Example 2 (MAH-g-OBC2) | 100% | 50% | 75% |

In Table 5, adhesion is calculated as follows:

$$\text{Adhesion (\%)} = 100\% - \% \text{ coating removed (measured by ASTM D 3359)}$$

The APC of Example 2 (MAH-g-OBC2) shows 100% adhesion to the TPO substrate. Example 2 with 2.5 wt% MAH-g-OBC2 shows TPO substrate-to-paint adhesion of 50%. Example 2 with 5.0 wt% MAH-g-OBC2 shows TPO substrate-to-paint adhesion of 75%. The base OBC2 has 48 mol% units derived from octene in the soft segment to match the majority amount of propylene-based polymer in the TPO substrate. TPO substrate-to-paint adhesion can be further improved by using a base OBC with a higher MI and/or a higher MAH grafting level.

The APC of CS1 (MAH-g-EPDM) shows a mis-match with the propylene homopolymer of the TPO substrate resulting in 50% adhesion between the CS1 to the TPO substrate. CS1 with 2.5 wt% MAH-g-OBC2 shows TPO substrate-to-paint adhesion of 0%. CS1 with 5.0 wt% MAH-g-OBC2 shows TPO substrate-to-paint adhesion of 20%.

The APC of Example 1(MAH-g-OBC1) shows a mis-match with the propylene homopolymer of the TPO substrate resulting in 50% adhesion between the Example 1 to the TPO substrate (50%). The base OBC1 has 28.2 mol% units derived from octene in the soft segment. Example 1 with 2.5 wt% MAH-g-OBC2 shows TPO substrate-to-paint adhesion of 25%. Example 1 with 5.0 wt% MAH-g-OBC2 shows TPO substrate-to-paint adhesion of 50%.

The examples show that tailoring the octene content in the soft segment of OBC to the type of polyolefin substrate to be painted improves the adhesion between (i) the adhesion promoter composition and the polyolefin substrate and (ii) the paint and the polyolefin substrate. In particular, selecting a base OBC with from 20 to 30 mol% units derived from octene in the SS yields adhesion to a substrate with a majority amount of ethylene-based polymer. Selecting a base OBC with greater than 35 to 50 mol% units derived from octene in the SS yields adhesion to a substrate with a majority of propylene-based polymer.

**Claims**

1. An adhesion promoter composition comprising:

   from 80 wt % to 99 wt % of a solvent; and
   from 20 wt % to 1 wt % of a maleic anhydride functionalized ethylene/octene multi-block copolymer with a base ethylene/octene multi-block copolymer comprising hard segments and soft segments linked in a linear fashion, the base ethylene/octene multi-block copolymer having

   (i) a crystallinity from 1 % to 10 %, wherein the percent crystallinity is calculated by dividing the heat of fusion determined from a second heat curve obtained from DSC, by 292 J/g, and multiplying this quantity by 100; and
   (ii) a melt index from greater than 15 g/10 min to 100 g/10 min, the melt index being measured in accordance with ASTM D 1238, Condition 190°C/2.16 kg.

2. The adhesion promoter composition of claim 1 wherein the composition is halogen free.

3. The adhesion promoter composition of claim 1 wherein the solvent is selected from the group consisting of xylene, toluene, benzene, methyl ethyl ketone, methyl isobutyl ketone, and combinations thereof.

4. The adhesion promoter composition of claim 1 wherein the functionalized olefin block copolymer comprises from 0.1 wt % to 1.0 wt % of maleic anhydride.

5. The adhesion promoter composition of any of claims 1-4 wherein the functionalized olefin block copolymer comprises a base ethylene/octene multi-block copolymer with a soft segment comprising from 20 mol % to 35 mol % units derived from octene.

6. The adhesion promoter composition of any of claims 1-4 wherein the functionalized olefin block copolymer comprises a base ethylene/octene multi-block copolymer with a soft segment comprising from 35 mol % to 50 mol % units derived from octene.

7. An article comprising:

   a substrate surface comprising a polyolefin; and
   a layer of a functionalized olefin block copolymer on the substrate surface, wherein the functionalized olefin block copolymer is a maleic anhydride functionalized ethylene/octene multi-block copolymer with a base ethylene/octene multi-block copolymer comprising hard segments and soft segments linked in a linear fashion, the base ethylene/octene multi-block copolymer having

   (i) a crystallinity from 1% to 10%; and
   (ii) a melt index from greater than 15 g/10 min to 100 g/10 min.

8. The article of claim 7 wherein the substrate surface comprises a majority amount of an ethylene-based polymer and the functionalized olefin block copolymer comprises a base ethylene/octene multi-block copolymer comprising from 20 mol % to 35 mol % units derived from octene in the soft segment.

9. The article of claim 7 wherein the polyolefin substrate surface comprises a majority amount of a propylene-based polymer and the functionalized olefin block copolymer comprises a base ethylene/octene multi-block copolymer comprising from 35 mol % to 50 mol % units derived from octene in the soft segment.

10. The article of any of claims 7-9 comprising a layer of a coating material on the layer of the functionalized olefin block copolymer.

**Patentansprüche**

1. Haftvermittlerzusammensetzung, umfassend:

   von 80 Gew.-% bis 99 Gew.-% eines Lösungsmittels; und
   von 20 Gew.-% bis 1 Gew.-% eines Maleinsäureanhydrid-funktionalisierten Ethylen/Octen-Multiblockcopolymers mit einer Ethylen/Octen-Multiblockcopolymer-Basis, umfassend harte Segmente und weiche Segmente, verbunden in einer linearen Weise, die Ethylen/Octen-Multiblockcopolymer-Basis mit

   (i) einer Kristallinität von 1 % bis 10 %, wobei die prozentuale Kristallinität durch Dividieren der Schmelzwärme, bestimmt in einer zweiten Wärmekurve, erhalten durch DSC, durch 292 J/g und Multiplizieren dieser Menge mit 100 berechnet wird; und
   (ii) einem Schmelzindex von größer als 15 g/10 min bis 100 g/10 min, wobei der Schmelzindex gemäß ASTM D 1238, Bedingung 190°C/2,16 kg, gemessen wird.

2. Haftvermittlerzusammensetzung nach Anspruch 1, wobei die Zusammensetzung halogenfrei ist.

3. Haftvermittlerzusammensetzung nach Anspruch 1, wobei das Lösungsmittel ausgewählt ist aus der Gruppe bestehend aus Xylol, Toluol, Benzol, Methylethylketon, Methylisobutylketon und Kombinationen davon.

4. Haftvermittlerzusammensetzung nach Anspruch 1, wobei das funktionalisierte Olefin-Blockcopolymer 0,1 Gew.-% bis 1,0 Gew.-% Maleinsäureanhydrid umfasst.

5. Haftvermittlerzusammensetzung nach einem der Ansprüche 1 bis 4, wobei das funktionalisierte Olefin-Blockcopolymer eine Ethylen/Octen-Multiblockcopolymer-Basis mit einem Weichsegment, umfassend von 20 Mol-% bis 35 Mol-% von Octen abgeleitete Einheiten, umfasst.

6. Haftvermittlerzusammensetzung nach einem der Ansprüche 1-4, wobei das funktionalisierte Olefinblockcopolymer eine Ethylen/Octen-Multiblockcopolymer-Basis mit einem Weichsegment, umfassend von 35 Mol-% bis 50 Mol-% von Octen abgeleitete Einheiten, umfasst.

7. Ein Gegenstand, umfassend:

   eine Substratoberfläche, umfassend ein Polyolefin; und
   eine Schicht eines funktionalisierten Olefin-Blockcopolymers auf der Substratoberfläche, wobei das funktionalisierte Olefin-Blockcopolymer ein Maleinsäureanhydrid-funktionalisiertes Ethylen/Octen-Multiblockcopolymer mit einer Ethylen/Octen-Multiblockcopolymer-Basis ist, umfassend harte Segmente und weiche Segmente, verbunden in einer linearen Weise, die Ethylen/Octen-Multiblockcopolymer-Basis mit

   (i) einer Kristallinität von 1% bis 10%; und
   (ii) einem Schmelzindex von größer als 15 g/10 min bis 100 g/10 min.

8. Gegenstand nach Anspruch 7, wobei die Substratoberfläche eine Hauptmenge eines auf Ethylen basierten Polymers umfasst und das funktionalisierte Olefin-Blockcopolymer eine Ethylen/Octen-Multiblockcopolymer-Basis umfasst, umfassend von 20 Mol-% bis 35 Mol-% von Octen abgeleitete Einheiten im Weichsegment.

9. Gegenstand nach Anspruch 7, wobei die Polyolefinsubstratoberfläche eine Hauptmenge eines auf Propylen basierten Polymers umfasst und das funktionalisierte Olefin-Blockcopolymer eine Ethylen/Octen-Multiblockcopolymer-Basis umfasst, umfassend von 35 Mol-% bis 50 Mol-% von Octen abgeleitete Einheiten im Weichsegment.

10. Gegenstand nach einem der Ansprüche 7 bis 9, umfassend eine Schicht eines Beschichtungsmaterials auf der Schicht des funktionalisierten Olefin-Blockcopolymers.

**Revendications**

1. Une composition de promoteur d'adhésion comprenant :

de 80 % en poids à 99 % en poids d'un solvant ; et

de 20 % en poids à 1 % en poids d'un copolymère multibloc d'éthylène/octène fonctionnalisé par de l'anhydride maléique avec une base de copolymère multibloc d'éthylène/octène comprenant des segments durs et des segments mous reliés de manière linéaire, la base de copolymère multibloc d'éthylène/octène ayant

(i) une cristallinité allant de 1 % à 10 %, dans laquelle le pourcentage de cristallinité est calculé en divisant la chaleur de fusion déterminée à partir d'une deuxième courbe de chaleur obtenue à partir d'une DSC, par 292 J/g, et en multipliant cette quantité par 100 ; et

(ii) un indice de fluidité à l'état fondu allant de plus de 15 g/10 min à 100 g/10 min, l'indice de fluidité à l'état fondu étant mesuré conformément à l'ASTM D 1238, condition 190 °C/2,16 kg.

2. La composition de promoteur d'adhésion de la revendication 1, la composition étant exempte d'halogènes.

3. La composition de promoteur d'adhésion de la revendication 1 dans laquelle le solvant est sélectionné dans le groupe constitué du xylène, du toluène, du benzène, de la méthyléthylcétone, de la méthylisobutylcétone, et de combinaisons de ceux-ci.

4. La composition de promoteur d'adhésion de la revendication 1 dans laquelle le copolymère à blocs d'oléfine fonctionnalisé comprend de 0,1 % en poids à 1,0 % en poids d'anhydride maléique.

5. La composition de promoteur d'adhésion de n'importe lesquelles des revendications 1 à 4 dans laquelle le copolymère à blocs d'oléfine fonctionnalisé comprend une base de copolymère multibloc d'éthylène/octène avec un segment mou comprenant de 20 % en mole à 35 % en mole d'unités dérivées d'octène.

6. La composition de promoteur d'adhésion de n'importe lesquelles des revendications 1 à 4 dans laquelle le copolymère à blocs d'oléfine fonctionnalisé comprend une base de copolymère multibloc d'éthylène/octène avec un segment mou comprenant de 35 % en mole à 50 % en mole d'unités dérivées d'octène.

7. Un article comprenant :

une surface de substrat comprenant une polyoléfine ; et

une couche d'un copolymère à blocs d'oléfine fonctionnalisé sur la surface de substrat, dans lequel le copolymère à blocs d'oléfine fonctionnalisé est un copolymère multibloc d'éthylène/octène fonctionnalisé par de l'anhydride maléique avec une base de copolymère multibloc d'éthylène/octène comprenant des segments durs et des segments mous reliés de manière linéaire, la base de copolymère multibloc d'éthylène/octène ayant

(i) une cristallinité allant de 1 % à 10 % ; et

(ii) un indice de fluidité à l'état fondu allant de plus de 15 g/10 min à 100 g/10 min.

8. L'article de la revendication 7 dans lequel la surface de substrat comprend une quantité majoritaire d'un polymère à base d'éthylène et le copolymère à blocs d'oléfine fonctionnalisé comprend une base de copolymère multibloc d'éthylène/octène comprenant de 20 % en mole à 35 % en mole d'unités dérivées d'octène dans le segment mou.

9. L'article de la revendication 7 dans lequel la surface de substrat de polyoléfine comprend une quantité majoritaire d'un polymère à base de propylène et le copolymère à blocs d'oléfine fonctionnalisé comprend une base de copolymère multibloc d'éthylène/octène comprenant de 35 % en mole à 50 % en mole d'unités dérivées d'octène dans le segment mou.

10. L'article de n'importe lesquelles des revendications 7 à 9 comprenant une couche d'une matière de revêtement sur la couche du copolymère à blocs d'oléfine fonctionnalisé.

FIG. 1

Figure 1. Paint adhesion rating for Inventive and Comparative Examples.

## REFERENCES CITED IN THE DESCRIPTION

**Patent documents cited in the description**

- US 7858706 B
- US 7608668 B
- US 4798081 A

**Non-patent literature cited in the description**

- **POTEMKIN.** *Physical Review E,* 1998, vol. 57 (6), 6902-6912
- **DOBRYNIN.** *J. Chem.Phvs.,* 1997, vol. 107 (21), 9234-9238
- **WILLIAMS ; WARD.** *J. Polym. Sci., Polym. Let.,* 1968, vol. 6, 621
- **WILDE, L. ; RYLE, T. R. ; KNOBELOCH, D. C. ; PEAT, I. R.** Determination of Branching Distributions in Polyethylene and Ethylene Copolymers. *J. Polym. Sci.,* 1982, vol. 20, 441-455
- **RANDALL, J. C.** *JMS-Rev. Macromol. Chem. Phys.,* 1989, vol. C29, 201-317